# EUROPÄISCHE PATENTSCHRIFT

(11) **EP 0 624 124 B1**
(45) Veröffentlichungstag und Bekanntmachung des Hinweises auf die Patenterteilung: **12.06.1996**
(21) Anmeldenummer: 93914527.2
(22) Anmeldetag: 26.01.1993
(51) Int. Cl.: B29C 47/64, B29B 7/48, B29C 47/40

(54) **MEHRWELLIGE KONTINUIERLICH ARBEITENDE MISCH- UND KNETMASCHINE FÜR PLASTIFIZIERBARE MASSEN**
MULTI-SHAFT CONTINUOUSLY OPERATING MIXING AND KNEADING MACHINE FOR PLASTICISABLE COMPOUNDS
MELANGEUR-MALAXEUR A ARBRES MULTIPLES TRAVAILLANT EN CONTINU POUR MATIERES PLASTIFIABLES

(30) Priorität: 31.01.1992 DE 4202821
(43) Veröffentlichungstag der Anmeldung: 17.11.1994
(73) Patentinhaber: FARREL CORPORATION, Ansonia Connecticut 06401 1601 (US)
(72) Erfinder: ROCKSTEDT, Siegward, D-5481 Schalkenbach (DE)
(74) Vertreter: Bardehle, Heinz, Dipl.-Ing.
(86) Internationale Anmeldenummer: EP9300170
(87) Internationale Veröffentlichungsnummer: WO9314921

(56) Entgegenhaltungen:
- EP-A- 0 037 984
- EP-A- 0 160 124
- DE-A- 1 014 735
- DE-A- 2 516 376
- DE-A- 3 738 700
- DE-A- 3 823 222
- US-A- 2 615 199
- PLASTICS ENGINNEERING Bd. 40, Nr. 4, April 1984, USA Seiten 27 - 30 S. SIRABIAN ET AL. 'Twin-screw compounding with reinforcements'

## Beschreibung

Die Erfindung bezieht sich auf eine mehrwellige kontinuierlich arbeitende Misch- und Knetmaschine für plastifizierbare Massen mit in einem Gehäuse drehenden Wellen, die jeweils ein die betreffende Welle umgebendes zylindrisches Teil des Gehäuses durchsetzen und Einzugs- und Austragszonen sowie dazwischen Aufschmelz-, Misch- und Knetzonen aufweisen, wobei die Einzugs- und Austragszonen durch ineinandergreifende gleichsinnig drehende Schnecken gebildet und in den Aufschmelz-, Misch- und Knetzonen Knetelemente angeordnet sind.

Eine derartige Maschine ist aus der DE-AS-1 679 884 bekannt. Bei dieser Maschine sind die Knetelemente als ineinandergreifende Knetscheiben ausgebildet die üblicherweise mit zwei oder drei axial verlaufenden Kanten versehen sind. Diese relativ schmalen Knetscheiben rufen in dem zu verarbeitenden Material aufgrund des Ineinandergreifens der Knetscheiben eine starke Scherung und damit große Wärmeentwicklung hervor. Dabei entstehen wegen der sich auf einen axial relativ kurzen Bereich konzentrierenden hohen Scherung häufig hohe Temperaturspitzen, die die Gefahr einer thermischen Schädigung des betreffenden Materials mit sich bringen wenn die Betriebsparameter der Maschine nicht besonders genau und sorgfältig eingestellt und überwacht werden.

Aus der DE-AS-24 52 994 ist eine diskontinuierlich arbeitende Knetmaschine bekannt, die lediglich chargenweise arbeitet und nach erfolgtem Knetvorgang durch Umkippen ausgeleert werden muß. Bei der bekannten Knetmaschine fehlen also alle für die kontinuierliche Arbeitsweise erforderlichen Bauteile und Zonen, insbesondere auch ein geschlossenes Gehäuse. Sie besitzt lediglich zwei gegenläufig rotierende Knetorgane, die mit gegenüber der Achsrichtung abgeschrägten Dreiecksflächen versehen sind deren Schrägrichtung abwechselnd in entgegengesetzter Richtung verläuft, um den bei dieser Maschine erforderlichen Effekt des abwechselnden Hin- und Herförderns des Knetgutes zu erzielen.

Der Erfindung liegt die Aufgabe zugrunde, den Aufschmelz-, Misch- und Knetprozeß so zu gestalten, daß dabei hohe Temperaturspitzen weitgehend ausgeschlossen werden Erfindungsgemäß geschieht dies dadurch, daß die Knetelemente aus axial gestreckten Polygonen bestehen, deren Flächen angenähert eben und im wesentlichen achsparallel verlaufen und deren Kanten beim Drehen nicht ineinander eingreifend mit geringem Spiel aneinander vorbeilaufen, wobei die Kanten von dem sie umgebenden Teil des Gehäuses einen gegenüber dem Spiel wesentlich größeren Abstand einhalten.

Zweckmäßige Weiterbildungen der Erfindung sind in den abhängigen Ansprüchen beschrieben.

Die nicht ineinander eingreifenden, axial gestreckten Polygone schaffen im Zusammenwirken mit dem betreffenden Gehäuseteil im Bereich der Flächen der Polygone sich axial erstreckende Kammern, in denen beim Vorbeilaufen einer Kante des Polygones der jeweils benachbarten Welle ein schonender Kneteffekt entsteht, da die Kante gewissermaßen in die Kammer eindringt und dabei das in der Kammer enthaltene und geförderte Material zur Seite drückt, ohne daß dabei besonders große Scherkräfte von dem Material aufzunehmen sind. Um dabei die insgesamt notwendige Knetwirkung zu entwickeln, ist das gestreckte Polygon entsprechend lang auszubilden, was aufgrund seiner Gestaltung technisch kein Problem bildet. Zweckmäßig ist die Länge der Polygone grösser als der Durchmesser ihrer Umhüllenden. Die geringe Scherbelastung des Materials wird dabei im wesentlichen dadurch erzielt, daß die Polygone nicht ineinander eingreifen und mit geringem Spiel aneinander vorbeilaufen. Aufgrund des gegenüber dem Spiel wesentlich größeren Abstandes der Kanten der Polygone von dem betreffenden Gehäuseteil ergibt sich ein ausreichend großer freier Querschnitt für den erforderlichen Durchsatz des Materials in Richtung zur Austragszone. Dabei steht diesem Bereich eine entsprechend große Oberfläche des Gehäuseteils gegenüber, was sich günstig auf eine gegebenenfalls notwendige Einleitung von Wärme vom Gehäuseteil her auswirkt.

Gegenüber den bekannten Knetscheiben ist die unter der Wirkung der Polygone auftretende Schergeschwindigkeit wesentlich geringer, was zu einer entsprechend reduzierten Wärmeentwicklung in dem zu verarbeitenden Material führt, wenn dieses entlang der Polygone geführt wird. Dabei wird im Bereich der von den Polygonen mit dem betreffenden Gehäuseteil gebildeten Kammern trotzdem ein hoher Mischeffekt erzielt, da die Verweilzeit des Materials in diesen Kammern relativ groß ist, jedenfalls größer als die Verweilzeit in den betreffenden Freiräumen bei den bekannten schmalen Knetscheiben, da diese aufgrund ihres Ineinandergreifens nur relativ kleine Freiräume belassen, so daß das zu verarbeitende Material an den Knetscheiben schnell vorbei gepreßt wird. Die längere Verweilzeit des Materials neben den Polygonen führt somit zu einer sich häufig wiederholenden Mischung in der betreffenden Kammer, ohne daß es dabei zu einer besonders hohen Wärmeentwicklung, insbesondere Wärmespitzen, kommt.

Die Einleitung von Wärme im Bereich der Polygone läßt sich in bekannter Weise durch außen am oder im Gehäuse angebrachte Heizelemente erzielen Eine so in das Material eingeführte zusätzliche Wärme ist wirtschaftlicher zu erzeugen als die durch hohe Scherung im Material erzeugte Wärme, die auf eine entsprechend notwendige Leistung der Antriebsmaschine zurückgeht. Das somit gegebene Drehmoment führt zu einem entsprechenden Verschleiß. Außerdem zeigt die Erfahrung, daß aufgrund der Temperaturspitzen, die durch hohe Scherung entstehen, die so erzeugte Wärme nachträglich durch Kühlung abgeführt werden muß, um das Material vor einer Schädigung zu bewahren. Diese Gefahr ist bei der erfindungsgemäßen Maschine weitgehend beseitigt, da einerseits, wie gesagt, die im Material bei dem Kneteffekt entstehende Wärme relativ gering ist und andererseits die von außen zugeführte Wärme leicht so dosiert werden kann, daß dabei keine Gefahr einer Beschädigung des Materials entstehen kann Somit ergibt sich bei der erfindungsgemäßen Maschine insbesondere bei Berücksichtigung einer notwendigen Kühlung eine insgesamt geringere Energiezufuhr bei gleichem Durchsatz im Vergleich zu Maschinen mit Verwendung der bekannten Knetscheiben.

Es sei noch darauf hingewiesen, daß es aus der DE-AS-1 014 735 im Zusammenhang mit einer zweiwelligen, mit nicht ineinander greifenden Schnecken versehenen Schneckenpresse bekannt ist, zwischen die Austrittsöfffnung der Maschine und den Schnecken Knetelemente vorzusehen, die pro Welle aus koaxialen zylindrischen Walzen mit auf gegenüber liegenden Seiten angeordneten ebenen Abflachungen bestehen. Der Durchmesser der Walzen ist dabei gegenüber dem Innendurchmesser der Schneckengehäuse verringert. Wegen des Nichtineinandergreifens der Schnecken und dem hieraus folgenden Nichtüberschneiden der Innenzylinder bildenden Wandungen der beiden Schneckengehäuse (die Innenzylinder berühren sich gerade im mittleren Bereich zwischen den Schnecken) ergibt sich bei dieser Durchmesserverringerung der Walzen in bezug auf den Innendurchmesser des betreffenden Schneckengehäuses sowohl im äußeren Bereich des Schneckengehäuses als auch im mittleren Bereich zwischen den Walzen ein Abstand außen zum Schneckengehäuse und innen zur jeweils gegenüberliegenden Walze, wobei im Bereich zwischen den Walzen der Abstand von Abflachung zu gegenüberliegender Abflachung doppelt so groß ist wie der Abstand zwischen einer Abflachung und dem äußeren Bereich des Schneckengehäuses. Dies bedeutet, daß im Betrieb die aneinander vorbeilaufenden Abflachungen der gegenüberliegenden Walzen der dort vorhandene Abstand besonders groß ist, nämlich doppelt so groß wie der Abstand der jeweils gerade außen befindlichen Abflachung gegenüber dem Schneckengehäuse, so daß die Knetwirkung in diesem für das Kneten besonders wichtigen Bereich entscheidend verringert wird und somit seine Intensität praktisch verloren geht. Abgesehen davon offenbart die genannte Druckschrift auch nur Knetelemente in der üblichen kurzen Länge, die wesentlich geringer ist als der Durchmesser der Schnecken.

Die Kanten der gestreckten Polygone kann man achsparallel ausrichten. In diesem Falle ergibt sich ein technisch einfach herstellbares Bauelement. Es ist jedoch auch möglich, die Kanten der gestreckten Polygone schräg auszurichten, nämlich insbesondere in einem derart kleinen Winkel zur Achsrichtung der betreffenden Welle verlaufen zu lassen, daß sich die Kanten nur über einen Bruchteil eines vollständigen Gewindegangs erstrecken. Im Falle gleichsinnigen Verlaufs der Kanten benachbarter Polygone ergeben sich bei Drehung der Welle fortschreitende Annährungsbereiche der gegenüberstehenden Kanten der Polygone, die eine entlang der Kanten wandernde Scherung hervorrufen, wobei das Material also auf einem längeren Weg einer momentanen Scherung und damit hier einer besonderen Mischwirkung ausgesetzt wird. Hierbei bleibt die relativ hohe Verweilzeit im Bereich der Polygone erhalten, wobei aber durch die wandernde Scherung das Material besonders gleichmäßig behandelt wird.

Um die neben den Flächen der Polygone gebildeten Mischkammern ständig gefüllt zu halten, sieht man zweckmäßig unmittelbar hinter den Polygonen Stauelemente vor. Als Stauelemente haben sich als besonders geeignet kurze Schnecken mit unterbrochenem Rückfördergewinde ergeben. An den Stellen der Unterbrechungen des Gewindes kann dann das Material von einem Gewindegang in den anderen Gewindegang überströmen.

Die gestreckten Polygone werden zweckmäßig als radial symmentrisches gleichseitiges Vieleck ausgebildet, so daß jede Polygonfläche in bezug auf die Gehäusewandung und das jeweils andere Polygon sich in gleicher Weise verhält. Dabei hat sich als besonders günstig ein im Querschnitt sechseckiges Polygon erwiesen, da sich bei diesem verfahrenstechnisch günstige Durchsatzquerschnitte für den Transport des zu bearbeitenden Materials ergeben.

Ausführungsbeispiele der Erfindung sind in den Figuren dargestellt.

Es zeigen:
- Figur 1: eine zweiwellige Misch- und Knetmaschine in Seitensicht,
- Figur 2: die gleiche Maschine in Draufsicht,
- Figur 3: einen Querschnitt durch die Maschine längs der Linie III-III aus Figur 2 mit einer winkelmäßigen Einstellung der beiden Wellen, in der die Kante eines Polygons der Fläche des anderen Polygons gegenübersteht,
- Figur 4: eine entsprechende (vergrößerter) Schnittdarstellung wie in Figur 3, jedoch mit einer anderen winkelmäßigen Einstellung der beiden Polygone,
- Figur 5 bis Figur 7: verschiedene Ausführungsformen des Polygons.

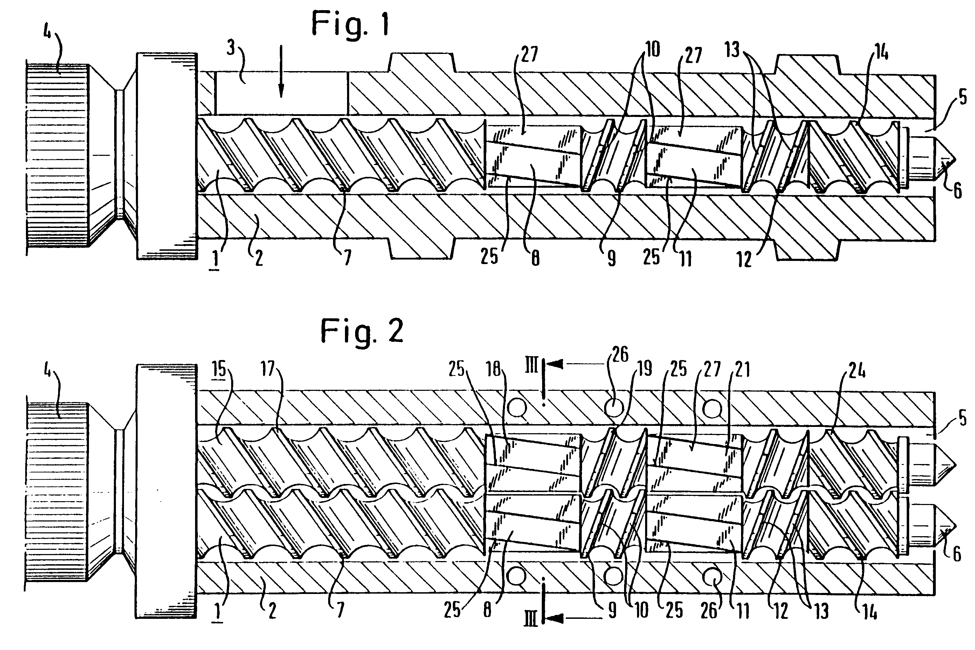

In der Figur 1 ist eine zweiwellige Misch- und Knetmaschine dargestellt, und zwar in Seitensicht, so daß nur die eine Welle 1 der Maschine zu sehen ist. Die Welle 1 ist in dem schematisch dargestellten Gehäuse 2 gelagert. Das Gehäuse 2 besitzt die Einlaßöffnung 3 für die Zuführung des zu verarbeitenden Materials. Am linken Ende des Gehäuses 2 ist das Antriebsaggregat 4 gezeichnet. Am rechten Ende des Gehäuses 2 ist der Auslaß 5 vorgesehen, der von der Schneckenspitze 6 durchsetzt wird. Insoweit handelt es sich um eine übliche Gestaltung einer zweiwelligen Misch- und Knetmaschine.

Die Welle 1 besitzt im Bereich der Einlaßöffnung 3 die Förderschnecke 7, an die sich das axial gestreckte Polygon 8 anschließt. Auf das Polygon 8 folgt eine relativ kurze Schnecke 9 mit gegenüber der Schnecke 7 gegenläufigem Schneckengewinde, so daß die Schnecke 9 als Stauelement wirkt. Auf den beiden dargestellten Gewindegängen der Schnecke 9 sind die beiden Unterbrechungen 10 vorgesehen, um im Bereich der Schnecke 9 trotz ihrer Stauwirkung den notwendigen Durchsatz zu erlauben. An die Schnecke 9 schließt sich ein weiteres Polygon 11 an, an das sich, wie nach dem Polygon 8 vorgesehen, die als Stauelement wirkende gegenläufige Schnecke 12 mit Unterbrechungen 13 anschließt, so daß sowohl das Polygon 8 und das Polygon 11 gegen die Wirkung der Schnecken 9 und 12 arbeiten. Den Abschluß der Welle 1 bildet die Austragschnecke 14, die daß ihr zugeführte verarbeitete Material dem Auslaß 5 zuführt.

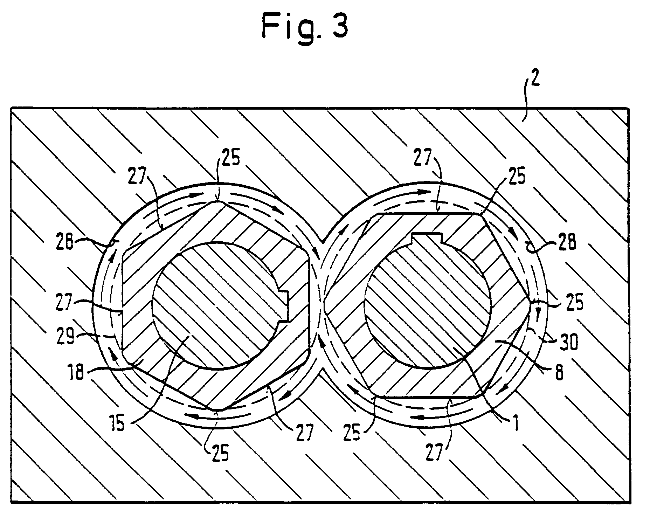

In Figur 2 ist die zweiwellige Misch- und Knetmaschine gemäß Figur 1 in Draufsicht dargestellt. Neben der Welle 1 ist die zweite Welle 15 angeordnet, die zusammen mit der Welle 1 in gleichem Drehsinn durch das Antriebsaggregat 4 angetrieben wird. Die in gleicher Weise wie die Welle 1 aufgebaute Welle 15 ist im Bereich der in der Figur 2 nicht sichtbaren Einlaßöffnung 3 mit der Förderschnecke 17 versehen, die in die Gewindegänge der Förderschnecke 7 eingreift und umgekehrt. Es handelt sich dabei also um in bekannter Weise ineinander eingreifende gleichsinnig angetriebene Schnecken 7 und 17, die aufgrund der ihnen innewohnenden Funktion das über die Einlaßöffnung 3 zugeführte Material von links nach rechts transportieren. Dabei gelangt das Material in den Bereich der Polygone 8 und 18, weiterhin zu den Stauelementen 9 und 19, weiterhin zu den Polygonen 11 und 21 und schließlich über die Austragschnecken 14 und 24 zu dem Auslaß 5.

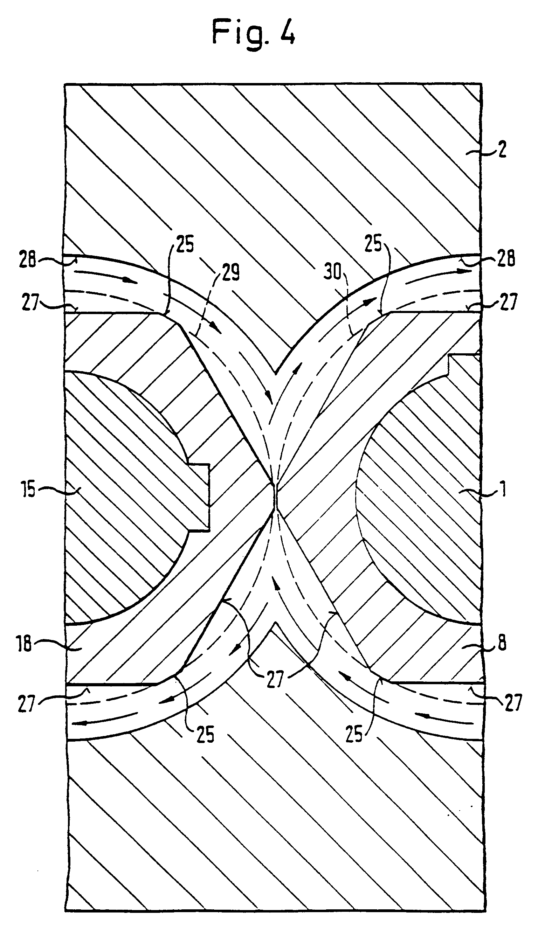

Im Bereich der Polygone 8 und 18 sowie 11 und 21 wird das von den Förderschnecken 7/17 antransportierte Material längs der Kanten 25 durchgeknetet, da sich bei der Drehung der Wellen 1 und 15 die Kanten 25 an den Flächen 27 bzw. Kanten 25 des jeweils gegenüberliegenden Polygons vorbeibewegen und dadurch in der bereits oben beschriebenen Weise das angeförderte Material durchkneten. Hierauf wird weiterhin im Zusammenhang mit den Figuren 3 und 4 eingegangen. Die Polygone 8/18 und 11/21 erstrecken sich über eine relativ große Länge innerhalb der gesamten Maschine, so daß die beim Kneten im zu bearbeitenden Material entstehende Wärme über eine entsprechende Länge verteilt ist und somit auf engem Raum entstehende Wärmespitzen vermieden werden. Evtl. zusätzlich erforderliche Wärme kann durch die im Gehäuse 2 vorgesehenen Bohrungen 26 zugeführt werden, die ein geeignetes Wärmeübertragungsmedium leiten.

In den Figuren 3 und 4 sind Querschnitte längs der Linie III-III aus Figur 2 dargestellt, wobei für die Darstellung in Figur 3 eine Einstellung der beiden Wellen 1 und 15 in einen solchen Winkel zueinander gewählt ist, daß bei Drehung der beiden Wellen jeweils eine Kante 25 an einer Polygonfläche 27 vorbeiläuft. Bei der Anordnung gemäß Figur 4 ist diese Einstellung der beiden Wellen 1 und 15 zueinander anders gewählt, nämlich so, daß hier zwei Kanten 25 der beiden gegenüberliegenden Polygone sich einander annähern. Dabei halten sowohl bei der Anordnung gemäß Figur 3 als auch Figur 4 die Umhüllenden 29/30 der beiden Polygone 8 und 18 voneinander ein Spiel ein, das wesentlich geringer ist als der Abstand der Kanten 25 von der Innenwand 28 des Gehäuses 2.

In dem Bereich zwischen den beiden Polygonen 8 und 18 ergibt sich sowohl bei der Anordnung gemäß Figur 3 als auch derjenigen gemäß Figur 4 ein ausgeprägter Kneteffekt auf das dazwischen liegende Material, wobei sich aber dieser Kneteffekt längs der Polygone über eine relativ große Länger erstreckt (siehe Figur 2), so daß der Knetvorgang besonders schonend für das zu verarbeitende Material vor sich geht. Liegen dabei die Kanten 25 der Polygone unter einem kleinen Winkel zu der jeweiligen Achsrichtung, wie dies in der Figur 2 dargestellt ist, so ergibt sich ein längs des jeweiligen Polygons wandernder Kneteffekt in Folge des axialen Wanderns des Annäherungsbereiches der jeweiligen Kante 25, die gerade dem anderen Polygon gegenüber steht. Der Kneteffekt wird damit längs des durchgesetzten Materials erzeugt, was sich besonders günstig auf die Vermischung verschiedener zugeführter Materialien auswirkt.

Der Knetvorgang sei nachstehend nochmals erläutert. Aus den Figuren 3 und 4 ergibt sich, daß die beiden Umhüllenden 29 und 30 der beiden Polygone 8 und 18 sich nicht überschneiden, womit dafür gesorgt ist, daß zwischen der Kante 25 und der Polygonfläche 27 ein relativ geringes Spiel verbleibt, in dem sich im wesentlichen der Knetvorgang abspielt. Dabei wird das zu verarbeitende Material entsprechend den eingezeichneten Pfeilen jeweils einer gewissen Scherung ausgesetzt, die auf die gleichsinnige Drehung der beiden Polygone 8 und 18 zurückzuführen ist, wobei jedoch im Bereich des zwischen den beiden Polygonen bestehenden Spiels die jeweils gegenüberstehenden Kanten 25 bzw. Polygonflächen 27 gegensinnig aneinander vorbeilaufen.

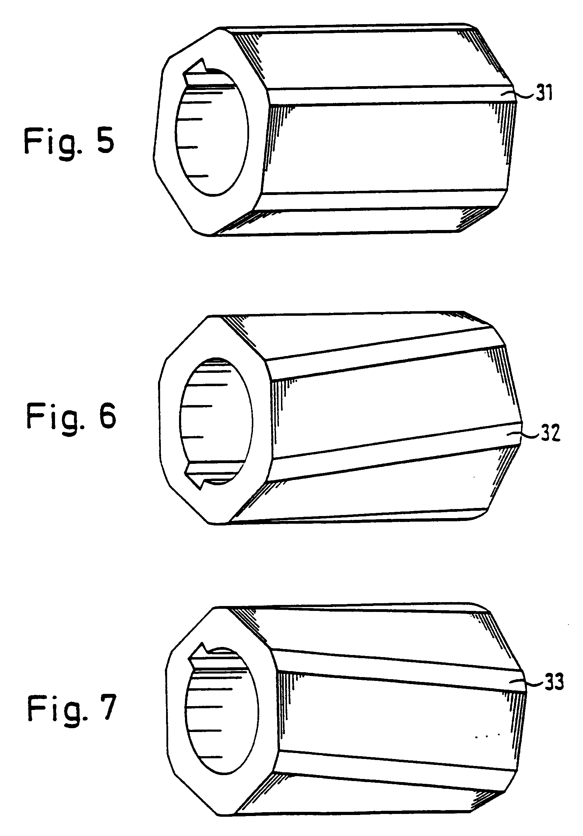

In den Figuren 5 bis 7 sind verschieden Gestaltungen des Polygons dargestellt.

Gemäß Figur 5 sind die Kanten 31 des Polygons achsparallel gerichtet. Bei den Figuren 6 und 7 handelt es sich um gegenüber der jeweiligen Polygonachse unter einem geringen Winkel verlaufende Kanten 32 und 33, wobei die Kanten 32 bzw. 33 jeweils einen entgegengesetzten Neigungssinn besitzen. Die Neigung ist dabei so gering, daß sich die Kanten 32 bzw. 33 nur über einen Bruchteil des Gan gs eines Gewindes erstrecken, das sich bei Fortsetzung der Kanten 32 und 33 mit besonders großer Steigung ergeben würde.

Es hat sich herausgestellt, daß eine Gestaltung der Polygone mit Kanten 25, wie sie in der Figur 2 dargestellt sind, sich am günstigsten auswirkt, bei der also die Kanten 25 den gleichen Neigungssinn besitzen, da sich in diesem Falle besonders ausgeprägt beim Gegenüberstellen einer Kante zum jeweils anderen Polygon der oben erwähnte Effekt des Wanderns des Knetvorganges ergibt.

Es sei noch darauf hingewiesen, daß längs einer mehrwelligen Misch- und Knetmaschine mehrere Polygonstufen hintereinander vorgesehen werden können, also auch mehr als die zwei Stufen, wie sie in den Figuren 1 und 2 dargestellt sind. Die Anzahl der Polygonstufen hängt im wesentlichen von dem zu verarbeitenden Material ab, insbesondere von der dabei jeweils aufzubringenden Wärmemenge. Es ist auch möglich, die Polygone gegenüber der Darstellung in den Figuren 1 und 2 zu kürzen und dafür dann eine größere Anzahl von Polygonstufen hintereinander vorzusehen. Es hat sich jedoch gezeigt, daß innerhalb einer einzelnen Polygonstufe nur dann ein ausreichender Kneteffekt erzielt werden kann, wenn die Länge der Polygone größer ist als der Durchmesser ihrer Umhüllenden.

Es sei noch darauf hingewiesen, daß auch z. B. dreiwellige Misch- und Knetmaschinen mit den axial gestreckten Polygonen versehen werden können. In den Figuren 5 bis 7 sind die Polygone als Hohlwellen dargestellt. Beim tatsächlichen Aufbau ist der Hohlraum jedoch von einem Anker ausgefüllt, der die jeweilige gesamte Welle durchsetzt und das Antriebsdrehmoment überträgt.

## Patentansprüche

1. Mehrwellige kontinuierlich arbeitende Misch- und Knetmaschine für plastifizierbare Massen mit in einem Gehäuse (2) drehenden Wellen (1,15), die jeweils ein die betreffende Welle umgebendes zylindrisches Teil des Gehäuses (2) durchsetzen und Einzugs- und Austragszonen sowie dazwischen Aufschmelz-, Misch- und Knetzonen aufweisen, wobei die Einzugs- und Austragszonen durch ineinandergreifende gleichsinnig drehende Schnecken (7,17;14,24) gebildet und in den Aufschmelz-, Misch- und Knetzonen Knetelemente angeordnet sind, **dadurch gekennzeichnet,** daß die Knetelemente aus axial gestreckten Polygonen (8,18;11,21) bestehen, deren Flächen (27) angenähert eben und im wesentlichen achsparallel verlaufen und deren Kanten (25) beim Drehen nicht ineinander eingreifend mit geringem Spiel zur Umhüllenden (29,30) des jeweils anderen Polygons an diesem vorbeilaufen, wobei die Kanten (25) von dem sie umgebenden Teil des Gehäuses (2) einen gegenüber dem Spiel wesentlich größeren Abstand einhalten.

2. Misch- und Knetmaschine nach Anspruch 1, **dadurch gekennzeichnet,** daß die Länge der Polygone (8,18;11,21) größer ist als der Durchmesser ihrer Umhüllenden (29,30).

3. Misch- und Knetmaschine nach Anspruch 1 oder 2, **dadurch gekennzeichnet,** daß die Kanten (31) der Polygone (8,18;11,21) achsparallel verlaufen.

4. Misch- und Knetmaschine nach Anspruch 1 oder 2, **dadurch gekennzeichnet,** daß die Kanten (25) der Polygone (8,18;11,21) in einem derart kleinen Winkel zur Achsrichtung der betreffenden Welle (1,15) verlaufen, daß sie sich nur über einen Bruchteil eines vollständigen Gewindegangs erstrecken.

5. Misch- und Knetmaschine nach Anspruch 4, **dadurch gekennzeichnet,** daß bei benachbarten Polygonen (8,18;11,21) die Steigungen der Kanten (25) gleichsinnig zueinander verlaufen.

6. Misch- und Knetmaschine nach einem der Ansprüche 1 bis 5, **dadurch gekennzeichnet,** daß unmittelbar hinter den Polygonen (8,18;11,21) Stauelemente (9,12) angeordnet sind.

7. Misch- und Knetmaschine nach Anspruch 6, **dadurch gekennzeichnet,** daß die Stauelemente (9,12) aus kurzen Schnecken mit unterbrochenem Rückfördergewinde bestehen.

8. Misch- und Knetmaschine nach einem der Ansprüche 1 bis 7, **dadurch gekennzeichnet,** daß die Polygone (8,18;11.21) im Querschnitt als gleichseitiges Vieleck, insbesondere Sechseck ausgebildet sind.

9. Misch- und Knetmaschine nach einem der Ansprüche 1 bis 8, **dadurch gekennzeichnet,** daß die Kanten (25,31,32,33) der Polygone (8,18;11,21) zu gegenüber den Polygonflächen (27) schmalen Bandflächen gebrochen sind.

## Claims

1. Multi-shaft continuously operating mixing and kneading machine for plasticizable compounds, with shafts (1, 15) rotating inside a housing (2), each such shaft passing through a cylindrical part (2) of the housing that surrounds the shaft concerned and comprising intake and discharge zones with melting, mixing and kneading zones between them, the intake and discharge zones being formed by interengaging worm spirals (7, 17; 14, 24) that rotate in the same direction, with kneading elements arranged within the melting, mixing and kneading zones, **characterized in that** the kneading elements consist of axially extended polygons (8, 18; 11, 21) whose surfaces (27) are approximately flat and extend essentially parallel to the axis and whose edges (25) move past the peripheral envelope (29, 30) of the other polygon on rotation without interengagement and with a small clearance, the distance maintained between the said edges (25) and the surrounding part (2) of the housing being substantially greater than the said clearance.

2. Mixing and kneading machine according to Claim 1, **characterized in that** the length of the polygons (8, 18; 11, 21) is greater than their peripheral diameter (29, 30).

3. Mixing and kneading machine according to Claims 1 or 2, **characterized in that** the edges (31) of the polygons (8, 18; 11, 21) run parallel to the axis.

4. Mixing and kneading machine according to Claims 1 or 2, **characterized in that** the edges (25) of the polygons (8, 18; 11, 21) are inclined at an angle with respect to the axial direction of the shaft (1, 15) concerned, the said angle being sufficiently small for the said edges to extend over only a fraction of one complete pitch.

5. Mixing and kneading machine according to Claim 4, **characterized in that** the inclination of the edges (25) of adjacent polygons (8, 18; 11, 21) are in the same direction as one another.

6. Mixing and kneading machine according to any of Claims 1 to 5, **characterized in that** compressor elements (9, 12) are positioned immediately behind the polygons (8, 18; 11. 21).

7. Mixing and kneading machine according to Claim 6, **characterized in that** the compressor elements (9, 12) consist of short worms with a back-feed thread whose turns have gaps in them.

8. Mixing and kneading machine according to any of Claims 1 to 7, **characterized in that** the cross-section of the polygons (8, 18; 11, 21) has the shape of a regular polygon, in particular a regular hexagon.

9. Mixing and kneading machine according to any of Claims 1 to 8, **characterized in that** the edges (25, 31, 32, 33) of the polygons (8, 18; 11, 21) are ground down to strip surfaces which are narrow compared with the polygon surfaces (27).

## Revendications

1. Machine à mélanger et à malaxer, a fonctionnement continu et à plusieurs arbres, pour masses plastifiables, comportant des arbres (1, 15) qui tournent dans un carter (2), qui traversent chacun une partie cylindrique du carter (2) entourant l'arbre en question, et qui présentent des zones d'introduction et d'évacuation, ainsi qu'entre celles-ci des zones de fusion, de mélange et de malaxage, les zones d'introduction et d'évacuation étant constituées par des vis sans fin (7, 17 ; 14, 24) s'engrenant et tournant dans le même sens et des éléments malaxeurs étant disposés dans les zones de fusion, de mélange et de malaxage, **caractérisée en ce que** les éléments malaxeurs consistent en des polygones (8, 18 ; 11, 21) axialement allongés, dont les faces (27) s'étendent approximativement planes et sensiblement parallèlement à l'axe, et dont les arêtes (25), lors de la rotation, passent, sans contact, avec un faible jeu par rapport aux lignes enveloppantes (29, 30) de chaque autre polygone tout près de celui-ci, les arêtes (25) conservant un écartement, par rapport à la partie du carter (2) qui les entoure, sensiblement plus grand que le jeu.

2. Machine à mélanger et à malaxer selon la revendication 1, **caractérisée en ce que** la longueur des polygones (8, 18 ; 11, 21) est plus grande que le diamètre de leurs lignes enveloppantes (29, 30).

3. Machine à mélanger et à malaxer selon la revendication 1 ou 2, **caractérisée en ce que** les arêtes (31) des polygones (8, 18 ; 11, 21) s'étendent parallèlement à l'axe.

4. Machine à mélanger et à malaxer selon la revendication 1 ou 2, **caractérisée en ce que** les arêtes (25) des polygones (8, 18 ; 11, 21) s'étendent par rapport à l'orientation de l'axe de l'arbre (1, 15) concerné en formant un petit angle, de telle manière qu'elles ne s'étendent que sur une fraction d'un pas de vis complet.

5. Machine à mélanger et à malaxer selon la revendication 4, **caractérisée en ce que** pour des polygones (8, 18 ; 11, 21) voisins, les rampes des arêtes (25) s'étendent dans le même sens les unes par rapport aux autres.

6. Machine à mélanger et à malaxer selon l'une des revendications 1 à 5, **caractérisée en ce que** des éléments de retenue (9, 12) sont disposés immédiatement derrière les polygones (8, 18 ; 11, 21).

7. Machine à mélanger et à malaxer selon la revendication 6, **caractérisée en ce que** les éléments de retenue (9, 12) consistent en de courtes vis sans fin à filetage interrompu de refoulement.

8. Machine à mélanger et à malaxer selon l'une des revendications 1 à 7, **caractérisée en ce que** les polygones (8, 18 ; 11, 21) sont, dans la section transversale, réalisés en tant que polygones à côtés égaux, notamment en tant qu'hexagones.

9. Machine à mélanger et à malaxer selon l'une des revendications 1 à 8, **caractérisée en ce que** les arêtes (25, 31, 32, 33) des polygones (8, 18 ; 11, 21) sont cassées en des petits méplats par rapport aux faces (27) des polygones.
